# FASCICULE DE BREVET EUROPEEN

(11) **EP 4 040 100 B1**
(45) Date de publication et mention de la délivrance du brevet: **24.07.2024**
(21) Numéro de dépôt: 22155284.7
(22) Date de dépôt: 04.02.2022
(51) Int. Cl.: G01B 3/20, G01B 5/06, B60T 17/22, F16D 66/02, F16D 65/00

(54) **DISPOSITIF DE CONTRÔLE D'USURE DE DISQUE DE FREIN ET SYSTÈME INFORMATISÉ DE GESTION DE MAINTENANCE DE VÉHICULES L'INCORPORANT**
VORRICHTUNG ZUR KONTROLLE DER ABNUTZUNG VON BREMSSCHEIBEN UND COMPUTERGESTÜTZTES SYSTEM ZUR STEUERUNG DER WARTUNG VON FAHRZEUGEN, DIE DIESE VORRICHTUNG ENTHALTEN
DEVICE FOR CONTROLLING THE WEAR OF A BRAKE DISC AND COMPUTERISED SYSTEM FOR MAINTENANCE MANAGEMENT OF VEHICLES INCLUDING SAME

(30) Priorité: 05.02.2021 FR 2101155
(43) Date de publication de la demande: 10.08.2022
(73) Titulaire: Norauto International, 59262 Sainghin en Melantois (FR)
(72) Inventeur: CRETON, Nicolas, 59380 West-Cappel (FR); CAUBERGHS, Matthieu, 59235 Bersée (FR)
(74) Mandataire: Yes My Patent

(56) Documents cités:
- FR-A1- 3 071 601
- FR-A1- 3 071 602
- US-B1- 6 205 672

## Description

L'invention concerne de manière générale l'entretien des systèmes de freinage à disque dans les véhicules automobiles. Plus particulièrement, l'invention se rapporte à un dispositif de contrôle d'usure de disque de frein. L'invention concerne aussi un système informatisé de gestion de maintenance de véhicules ayant un ou plusieurs dispositifs électroniques de contrôle d'usure de disque de frein connectés à un serveur informatique à travers un réseau sans fil de communication de données.

De manière générale, la vérification régulière et l'entretien des systèmes de freinage sont indispensables pour conserver un haut niveau de fiabilité et de sécurité dans les véhicules automobiles. Les pièces d'usure des systèmes de freinage, comme les garnitures de freinage et les disques de frein, doivent être vérifiées périodiquement et remplacées lorsque sont atteintes les cotes d'usure spécifiées par les constructeurs.

Pour un disque de frein, l'usure de celui-ci se traduit par une diminution de son épaisseur au niveau de bandes de frottement, dites aussi bandes d'usure ou zone d'usure, contre lesquelles sont pressées les garnitures lors d'un freinage. Le contrôle d'usure d'un disque de frein consiste donc à mesurer son épaisseur au niveau de ses bandes d'usure. Lorsque l'épaisseur du disque de frein devient inférieure à une valeur minimale spécifiée par le constructeur, celui-ci est déclaré « hors cote » et doit impérativement être remplacé.

Le contrôle d'usure des disques de frein est fait systématiquement dans les centres d'entretien et les ateliers de réparation automobile et requiert l'intervention manuelle d'un technicien de maintenance automobile. Classiquement, des instruments de mesure, comme un micromètre dit « Palmer » ou un pied à coulisse, sont utilisés pour mesurer l'épaisseur du disque de frein. Dans la plupart des véhicules, l'accès au disque de frein à travers la jante de la roue n'est pas possible avec l'instrument de mesure disponible et un démontage de la roue est alors nécessaire pour pouvoir réaliser la mesure d'épaisseur du disque. Le contrôle d'usure de l'ensemble des disques de frein du véhicule peut donc avoir une durée sensiblement accrue par les opérations de démontage/remontage des roues, opérations qui généralement requièrent une mise sur pont élévateur préalable du véhicule.

Un instrument de mesure autorisant, pour tout type de véhicule, la mesure des épaisseurs des disques de frein sans avoir à démonter les roues permettrait dans les centres de maintenance automobile de minimiser et de standardiser la durée d'intervention du technicien de maintenance automobile pour le contrôle d'usure des disques de frein.

Différentes solutions ont été proposées et sont connues dans l'état de la technique. Ainsi, dans sa demande de brevet français FR3071601A1, le demandeur a divulgué un dispositif de mesure de l'épaisseur d'un disque de frein conçu pour faciliter une mesure in situ, sans avoir à démonter la roue du véhicule. Ce dispositif de mesure comprend un écran d'affichage et des premier et deuxième bras coopérant par coulissement selon un axe longitudinal. Les premier et deuxième bras ont respectivement des premier et deuxième points d'appui formant mâchoire entre lesquels est mesurée l'épaisseur du disque de frein. L'écran d'affichage est solidaire du premier bras sur une portion proximale de celui-ci, opposée à une portion distale comprenant le premier appui. La distance de déplacement en translation du deuxième bras par rapport au premier bras est déterminée au moyen d'une molette rotative, couplée au premier et deuxième bras, et d'un capteur de tours. La mesure d'épaisseur est donnée par la distance d'écartement entre les premier et deuxième points d'appui. Le dispositif est glissé au travers d'un ajournement de la jante de roue afin d'atteindre une zone d'usure du disque de frein. L'écran d'affichage reste à l'extérieur de la roue de sorte que la mesure d'épaisseur s'y affichant peut être lue sans difficulté par l'opérateur.

Pour un grand nombre de véhicules, ce dispositif selon FR3071601A1 donne satisfaction et facilite la mesure d'épaisseur des disques de frein sans avoir à démonter les roues du véhicule. Cependant, pour certains véhicules, il reste nécessaire avec ce dispositif de démonter les roues pour réaliser la mesure d'épaisseur des disques. Par ailleurs, dans sa configuration générale et son principe de mesure avec molette rotative et capteur de tours, ce dispositif reste proche d'un pied à coulisse numérique, instrument de mesure qui n'a pas été conçu à l'origine, notamment sur le plan de son ergonomie et de sa robustesse, pour le contrôle d'usure in situ des disques de frein dans un environnement pollué par des salissures et des projections diverses.

Par le document US9347760B2, il est connu un outil combiné de jauges de mesure. Cet outil comprend une jauge d'épaisseur de plaquette de frein, une jauge de profondeur de bande de roulement de pneu et une jauge d'épaisseur de disque de frein. La jauge de profondeur de bande de roulement de pneu et la jauge d'épaisseur de disque de frein s'assemblent et forment un étrier définissant un espace dans lequel est inséré le disque de frein lors de la mesure. L'outil comporte également un châssis fixe sur lequel est fixé un module électronique muni d'un écran d'affichage et contenant l'électronique de mesure et commande. Une tige mobile actionnable par une molette, ou une tirette à ressort, est logée à l'intérieur du châssis fixe et contrôle le mouvement des jauges de mesure. L'outil comporte aussi des moyens de communication sans fil de type « Wi-Fi » / « Bluetooth^{®} », une batterie d'alimentation électrique et un connecteur de type « USB ». De par sa conception sous la forme d'un outil combiné dédié à différentes tâches, cet outil n'est pas optimisé, notamment sur le plan de son ergonomie, pour le contrôle d'usure in situ des disques de frein sans démontage des roues du véhicule.

Par le document CN207570423U, il est connu un outil de mesure de l'épaisseur d'un disque de frein de véhicule. De même que le dispositif selon FR3071601A1, cet outil possède une architecture générale qui est proche de celle d'un pied à coulisse. Cependant, il est prévu une tête de mesure de petite dimension pour une mesure de l'épaisseur du disque in situ sans nécessité de démonter la roue du véhicule. Un organe d'éclairage de type « LED » est intégré dans la tête de mesure pour faciliter à l'opérateur l'engagement de celle-ci avec le disque de frein. Un module de communication sans fil de type « Bluetooth^{®} » et une batterie d'alimentation électrique et un module Bluetooth sont également prévus dans cet outil de mesure.

La présente invention a pour objectif de procurer un dispositif de contrôle d'usure de disque de frein de véhicule ayant une ergonomie optimisée pour son cas d'usage, ne présentant pas les inconvénients susmentionnés de l'état de la technique et conçu pour une intégration aisée dans un système informatisé de gestion de maintenance de véhicules autorisant une gestion et un suivi historique des contrôles des disques de frein sur les véhicules.

Selon un premier aspect tel que défini dans la revendication 1, l'invention concerne un dispositif de contrôle d'usure de disque de frein de véhicule comprenant un corps longitudinal formé d'une première tige et d'une deuxième tige assemblées en coulissement, et une tête de mesure formée à une première extrémité du corps longitudinal et ayant des premier et deuxième doigts d'étrier destinés à enserrer le disque de frein sur son épaisseur, les premier et deuxième doigts d'étrier étant solidaires respectivement des première et deuxième tiges et ayant une distance d'écartement ajustable par un coulissement de la deuxième tige par rapport à la première tige, et un boîtier électronique comprenant un capteur de mesure de déplacement pour la mesure de la distance d'écartement des doigts d'étrier, des moyens électronique de mesure et de commande et des moyens d'interface homme-machine muni d'un écran d'affichage de la mesure d'épaisseur du-disque de frein par le capteur de déplacement.

Conformément à l'invention, le boîtier électronique comprend une poignée de préhension et supporte le corps longitudinal par un assemblage avec une deuxième extrémité de celui-ci, et le corps longitudinal a une longueur hors boîtier électronique et la tête de mesure a un encombrement facial et une distance d'écartement maximum des premier et deuxième doigts d'étrier qui sont optimisés pour une adaptation du dispositif de contrôle à différents types de disque de frein et configurations de montage dans le véhicule.

Selon l'invention, la longueur hors boîtier électronique du corps longitudinal est au moins égale à 200 millimètres, l'encombrement facial est déterminé par une longueur faciale comprise entre 23 et 27 millimètres et une largeur faciale comprise entre 4 et 8 millimètres, et la distance d'écartement maximum est comprise entre 40 et 60 millimètres

Selon une caractéristique particulière, le dispositif comprend également un organe de tirage fixé sur la deuxième tige et agencé de façon à procurer une prise à un opérateur pour un actionnement de celle-ci.

Selon encore une autre caractéristique particulière, l'organe de tirage est fixé sur la deuxième tige à une distance comprise entre 90 et 140 millimètres par rapport à une extrémité frontale de la tête de mesure lorsque celle-ci est totalement fermée avec les premier et deuxième doigts d'étrier en appui l'un contre l'autre.

Selon encore une autre caractéristique particulière, le dispositif comprend également un ressort couplé mécaniquement avec la deuxième tige et exerçant une action de fermeture du deuxième doigt d'étrier contre le premier doigt d'étrier.

Selon encore une autre caractéristique particulière, le capteur de mesure de déplacement comprend une bobine électrique ayant un noyau mobile qui est couplé mécaniquement à la deuxième tige, la bobine électrique étant connectée à un circuit de mesure d'inductance

Selon encore une autre caractéristique particulière, la tête de mesure comprend un organe d'éclairage.

Selon encore une autre caractéristique particulière, le boîtier électronique comprend également un module de communication radio.

Selon encore une autre caractéristique particulière, le dispositif comprend un mode de fonctionnement connecté dans lequel une communication de données est établie avec un dispositif externe.

Selon un autre aspect tel que défini dans la revendication 9, l'invention concerne aussi un système informatisé de gestion de maintenance de véhicules comprenant un serveur informatique relié à un réseau de communication de données et au moins un dispositif de contrôle d'usure de disque de frein de véhicule tel que décrit brièvement ci-dessus qui est relié au réseau de communication de données et échange des données avec le serveur informatique.

D'autres avantages et caractéristiques de la présente invention apparaîtront plus clairement à la lecture de la description ci-dessous de plusieurs formes de réalisation particulières en référence aux dessins annexés, dans lesquels :
[Fig.1] La Fig. 1 illustre l'utilisation d'un dispositif de contrôle de disque de frein selon l'invention pour le contrôle d'usure des disques de frein d'un véhicule, in situ et sans démontage des roues du véhicule.
[Fig.2] La Fig.2 est une vue en perspective d'une forme de réalisation particulière du dispositif de contrôle de disque de frein selon l'invention.
[Fig.3] La Fig.3 est une vue en coupe du dispositif de contrôle de disque de frein de la Fig.2.
[Fig.4] La Fig.4 est une vue simplifiée de face montrant un disque de frein monté sur un véhicule et son environnement proche.
[Fig.5] La Fig.5 est une vue simplifiée en coupe montrant une tête de mesure du dispositif de contrôle de disque de frein de la Fig.2, en place sur un disque de frein pour une mesure d'épaisseur de celui-ci.
[Fig.6] La Fig.6 est une courbe montrant la variation de l'inductance d'un capteur de mesure de déplacement compris dans le dispositif de contrôle de disque de frein de la Fig.2, en fonction d'un déplacement d'un noyau dans une bobine électrique du capteur de mesure de déplacement.
[Fig.7] La Fig.7 est un bloc-diagramme d'une carte électronique comprise dans le dispositif de contrôle de disque de frein de la Fig.2.
[Fig.8] La Fig.8 est un algorithme relatif à deux modes de fonctionnement, autonome et connecté, prévus dans un dispositif de contrôle de disque de frein selon l'invention.
[Fig.9] La Fig.9 est un bloc-diagramme général de l'exemple de réalisation d'un système informatisé de gestion de maintenance de véhicules selon l'invention incorporant une pluralité de dispositifs de contrôle de disque de frein selon l'invention.

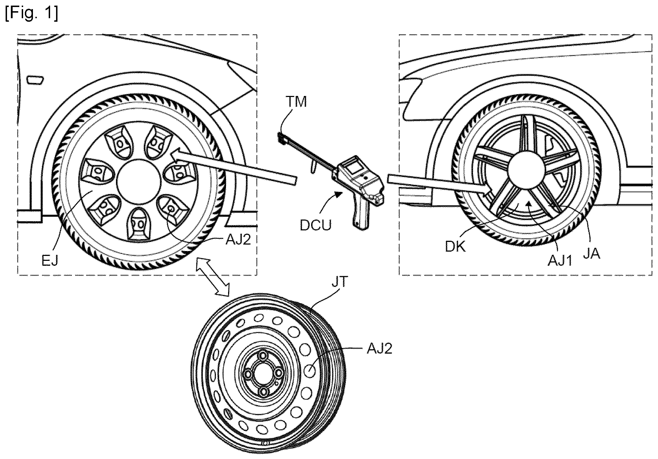

En référence aux Figs.1 à 8, il est maintenant décrit ci-dessous une forme de réalisation particulière DCU d'un dispositif de contrôle d'usure de disque de frein selon l'invention.

En référence à la Fig.1, le dispositif de contrôle DCU est conçu pour le contrôle d'usure de disque de frein, sans démontage de roue, pour l'ensemble du parc existant de véhicules commercialisés, en particulier, les véhicules légers dits « VL » et les véhicules utilitaires dits « VU ». Ainsi, le dispositif de contrôle DCU est utilisable pour le contrôle d'usure, sans démontage de roue, des différentes références de disques de frein montées sur les véhicules, à travers les deux types de jantes équipant les véhicules, à savoir, la jante en aluminium JA et la jante en tôle JT.

Comme illustré à la Fig.1, une jante en aluminium JA comporte généralement entre ses bras radiaux des ajournements AJ1 qui sont de taille relativement importante et qui procure un bon accès au disque de frein DK. Par un ajournement AJ1, une tête de mesure TM du dispositif de contrôle DCU peut être insérée par un opérateur sans trop de difficulté et venir en engagement avec le disque de frein DK de façon à effectuer la mesure d'épaisseur du disque DK sans avoir à démonter la roue du véhicule.

Dans le cas d'une jante en tôle JT, celle-ci comporte une multitude d'ajournements circulaires AJ2 ayant un diamètre standardisé de 30 mm. La petite taille des ajournements circulaires AJ2, comparativement à celle des ajournements AJ1, ne facilite pas l'accès au disque de frein (non visible à la Fig.1 pour la jante JT) pour la mesure de son épaisseur. De plus, un enjoliveur EJ est généralement plaqué sur la jante en tôle JT et peut limiter le passage de la tête de mesure TM à travers un ajournement AJ2. Comme cela apparaîtra plus clairement par la suite, conformément à l'invention, la tête de mesure TM du dispositif de contrôle DCU est calibrée dimensionnellement pour passer à travers les ajournements AJ2. Il en découle que la tête de mesure TM peut aussi être insérée par un opérateur à travers un ajournement AJ2 et venir en engagement avec le disque de frein de façon à effectuer la mesure d'épaisseur du disque sans avoir à démonter la roue du véhicule.

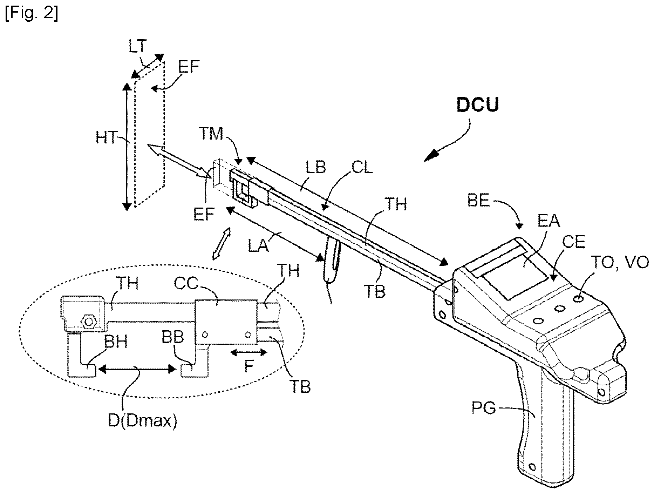

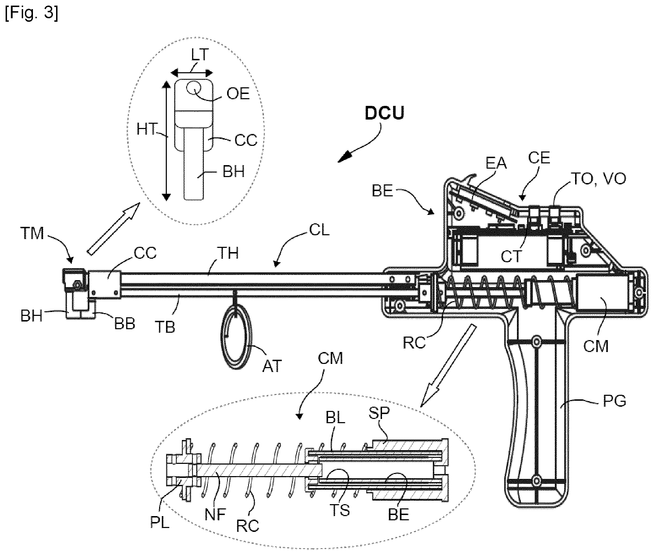

En référence plus particulièrement aux Figs.2 et 3, le dispositif de contrôle DCU est conçu de manière ergonomique afin de rendre aisée sa manipulation et son utilisation par l'opérateur, et cela pour tous types de véhicules, avec des jantes en aluminium ou des jantes en tôle, et pour les différences références de disques de frein.

Comme bien visible aux Figs.2 et 3, le dispositif de contrôle DCU comprend essentiellement la tête de mesure TM, un corps longitudinal CL formé de première et deuxième tiges TH et TB et un boîtier électronique BE.

La tête de mesure TM est formée à une première extrémité du corps longitudinal CL, première extrémité qui est distante du boîtier électronique BE, et comporte notamment des premier et deuxième doigts formant étrier BH et BB et un organe d'éclairage OE. L'organe d'éclairage OE est particulièrement utile pour éclairer le disque de frein et son environnement lors de la mise en place de la tête de mesure TM sur le disque pour le contrôle de celui-ci.

La première tige TH du corps longitudinal CL comporte le premier doigt d'étrier BH. Ce premier doigt d'étrier BH est fixé solidairement à la tige TH au niveau d'une première extrémité de celle-ci distante du boîtier électronique BE. La première tige TH est supportée par le boîtier électronique BE et est fixée sur celui-ci au niveau d'une deuxième extrémité.

La deuxième tige coulissante TB du corps longitudinal CL comporte le deuxième doigt d'étrier BB. Le deuxième doigt d'étrier BB est fixé solidairement à la deuxième tige coulissante TB au niveau d'une première extrémité de celle-ci, par l'intermédiaire d'un chariot de coulissement CC. Le chariot CC est fixé solidairement à la première extrémité de la deuxième tige coulissante TB et est engagé avec la première tige TH. Le chariot CC est porté par la première tige TH et son agencement avec celle-ci autorise un coulissement longitudinal (cf. la flèche F à la Fig.2) de la deuxième tige coulissante TB par rapport à la première tige TH. Ce coulissement autorise l'ouverture et la fermeture des doigts d'étrier BH et BB.

A l'état de repos, les doigts d'étrier BH et BB sont fermés, en appui l'un contre l'autre. Un ressort de compression RC, visible à la Fig.2, est logé dans le boîtier électronique BE et pousse la deuxième tige coulissante TB en avant, vers l'extérieur du boîtier électronique BE, pour obtenir une fermeture des doigts d'étrier BH et BB à l'état de repos. Un organe de tirage AT, sous la forme d'un anneau, est fixé sur la deuxième tige coulissante TB et permet à l'opérateur de tirer celle-ci en arrière, vers l'intérieur du boîtier électronique BE, pour obtenir une ouverture des doigts d'étrier BH et BB.

Les dimensions de la tête de mesure TM et du corps longitudinal CL ont été optimisées par l'entité inventive pour octroyer au dispositif de contrôle DCU la capacité à contrôler l'usure, sans démontage des roues, des différents types de disques de frein montés sur les véhicules, à travers des jantes en aluminium ou des jantes en tôle.

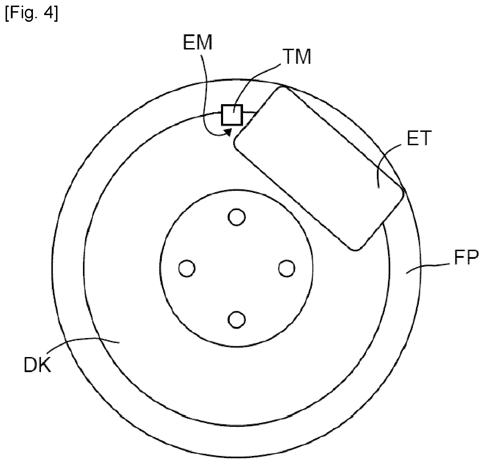

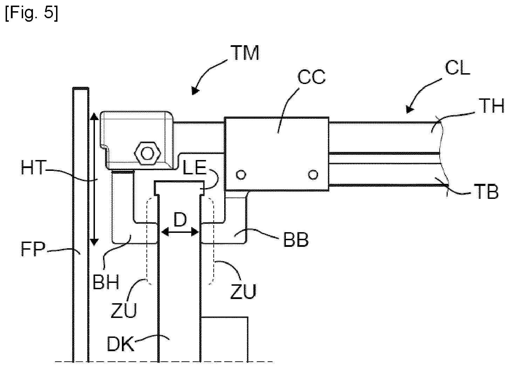

L'encombrement facial EF de la tête de mesure TM, montré aux Figs.2 et 3, est déterminé par une longueur faciale HT et une largeur faciale LT. En référence aussi aux Figs.4 et 5, cet encombrement facial EF doit être minimisé pour favoriser un accès aisé de la tête de mesure TM jusqu'à un emplacement de mesure EM sur le disque de frein DK, sachant que l'accès de celle-ci jusqu'à l'emplacement EM est contraint par la taille des ajournements AJ1, AJ2, des jantes et par l'environnement du disque DK, notamment, l'étrier de disque ET et le flasque de protection de disque FP. Cependant, comme visible à la Fig.5, la taille de la tête de mesure TM, notamment sa longueur faciale HT, doit être suffisante pour permettre aux doigts d'étrier BH, BB, d'enserrer le disque DK au niveau des bandes d'usure ZU de celui-ci. Les bandes d'usure ZU sont situées sous des lèvres protubérantes LE, sur le pourtour circonférentiel du disque DK, qui sont formées par le creusement des bandes d'usure ZU par les plaquettes de freinage portées par l'étrier de frein ET. Les différentes simulations et essais réalisés par l'entité inventive ont permis de déterminer que l'encombrement facial EF=HTxLT optimal est obtenu pour une longueur faciale HT comprise entre 23 mm et 27 mm et une largeur faciale LT comprise entre 4 mm et 8 mm

En référence aux Figs.2 et 5, lorsque le disque DK est enserré par les doigts d'étrier BH, BB, la distance d'écartement D entre ceux-ci est alors la mesure d'épaisseur du disque DK. Une distance d'écartement maximum Dmax des doigts d'étrier BH, BB, comprise entre 40 mm et 60 mm a été déterminée par l'entité inventive sur la base de simulations et d'essais. Cette distance d'écartement maximum Dmax est déterminée de façon à pouvoir enserrer tous les types de disques, dans différentes configurations de montage sur véhicule, du parc de véhicules existant, et cela en prenant en compte des situations dans lesquelles les doigts d'étrier BH, BB, doivent être positionnés en biais initialement sur le disque DK, avant de pouvoir enserrer correctement le disque DK, comme montré à la Fig.5.

En référence à la Fig.2, la longueur LB du corps longitudinal CL, mesurée hors boîtier électronique BE, et le positionnement de l'anneau de tirage AT ont également a été déterminés par l'entité inventive sur la base de simulations et d'essais, de façon à ce que le dispositif de contrôle DCU soit utilisable pour tous les types de disques, dans différentes configurations de montage sur véhicule, du parc de véhicules existant. Ainsi, une longueur LB requise d'au moins 200 mm s'avère nécessaire. Concernant, le positionnement de l'anneau de tirage AT, celui-ci peut être fixé sur la tige coulissante TB à une distance LA comprise entre 90 mm et 140 mm par rapport à l'extrémité frontale de la tête de mesure TM, lorsque celle-ci est totalement fermée avec les doigts d'étrier BH, BB, en appui l'un contre l'autre, comme montré à la Fig.2.

A titre d'exemple, d'excellents résultats de polyvalence du dispositif de contrôle DCU pour tous les types de disques, dans différentes configurations de montage sur véhicule, du parc de véhicules existant ont été obtenus avec un dispositif de contrôle DCU ayant les caractéristiques dimensionnelles suivantes : HT=25,4 mm, LT=6 mm, Dmax=50 mm, LB=201 mm et LA=107,6 mm.

En référence plus particulièrement aux Figs.2 et 3, le boîtier électronique BE est formé essentiellement d'une poignée de préhension PG et d'une console électronique CE. La console électronique CE comprend notamment un capteur de mesure de déplacement CM équipé du ressort de compression RC susmentionné, une carte électronique CT et des moyens d'interface homme-machine comprenant essentiellement un écran d'affichage EA et des touches TO et voyants VO.

La poignée de préhension PG est un composant essentiel du dispositif de contrôle DCU et de son ergonomie. Grâce à cette poignée PG, l'opérateur peut tenir de manière commode le dispositif de contrôle DCU et mouvoir celui-ci efficacement pour obtenir la mise en place de la tête de mesure TM sur le disque de frein DK, comme montré à la Fig.5. De plus, l'opérateur, grâce à cette poignée PG, peut orienter aisément le dispositif de contrôle DCU pour obtenir une meilleure visibilité de l'écran EA et des informations affichées sur celui-ci.

Comme visible à la Fig.3, le capteur de mesure de déplacement CM est un capteur de type inductif comprenant notamment un noyau mobile NF, typiquement sous la forme d'une tige métallique, et une bobine électrique BE. Le noyau NF est solidaire de la tige coulissante TB et se déplace avec celle-ci. Le déplacement du noyau NF dans la bobine électrique BE modifie l'induction magnétique dans celle-ci.

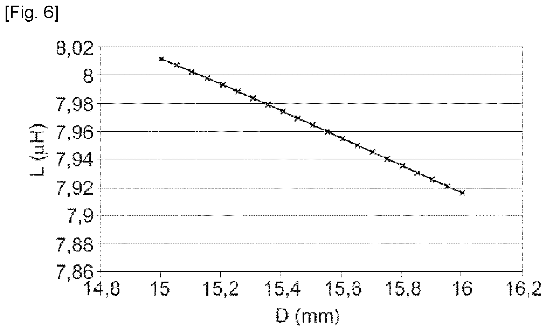

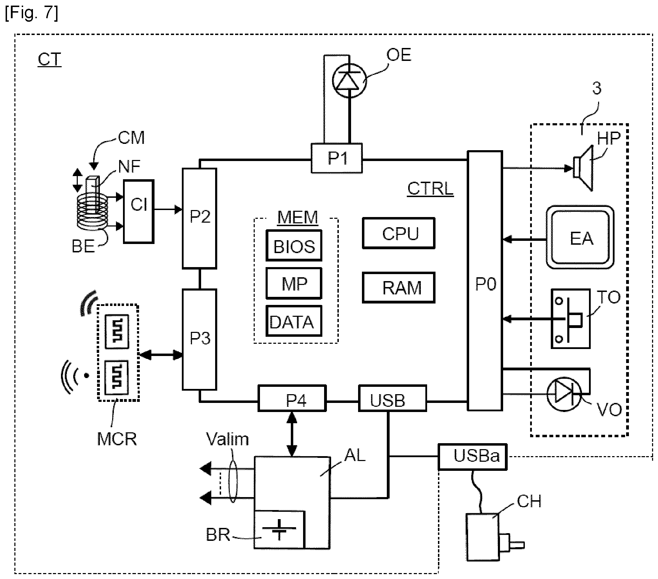

L'inductance L de la bobine électrique BE est liée à la position du noyau NF dans la bobine BE et varie proportionnellement au déplacement de celui-ci, comme illustré par la courbe de la Fig.6 pour une variation de 1 mm de la position du noyau NF. La bobine électrique BE est alimentée par un circuit de mesure CI (visible à la Fig.7). Le circuit de mesure CI fournit une valeur de mesure de l'inductance L, valeur de mesure à partir de laquelle est déduite la distance d'écartement D des doigts d'étrier BH, BB.

Comme visible à la Fig.3, le capteur de mesure CM comporte en outre un tube support diélectrique TS sur lequel est enroulée la bobine électrique BE, un blindage magnétique BL, un support de bobine SP et le ressort de compression RC. Le blindage magnétique BL assure une protection de la mesure contre les perturbations électromagnétiques. Le support de bobine SP participe au montage mécanique du capteur de mesure CM à l'intérieur du boîtier électronique BE et sert d'assise à une extrémité du ressort de compression RC. Le ressort RC est monté en compression entre le support de bobine SP et une pièce de liaison mécanique PL assurant un assemblage des extrémités du noyau NF et de la tige coulissante TB. Ainsi, le ressort de compression RC pousse le noyau NF vers l'extérieur de la bobine électrique BE et, corrélativement, la tige coulissante TB vers l'extérieur du boîtier électronique BE pour la fermeture des doigts d'étrier BH et BB.

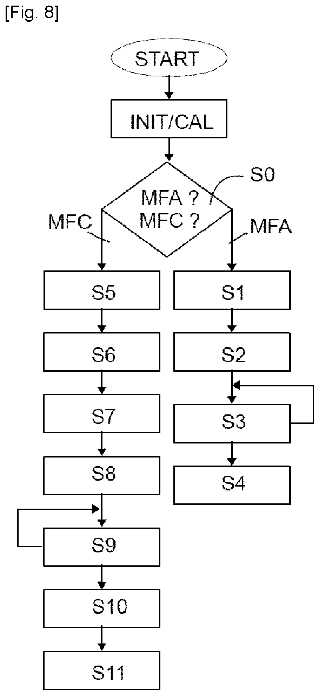

En référence aussi aux Figs.7 et 8, il est décrit maintenant ci-dessous l'architecture électronique du dispositif de contrôle DCU, comprenant la carte électronique CT, ainsi que son fonctionnement.

La carte électronique CT, montrée schématiquement à la Fig.7, est incluse dans le boîtier électronique BE et supporte différents composants nécessaires au fonctionnement du dispositif de contrôle DCU. Comme montré à la Fig.7, la carte électronique CT comprend essentiellement un microcontrôleur CTRL auquel sont associés les moyens d'interface homme-machine EA, TO, VO susmentionnées et un haut-parleur miniature HP, ainsi que l'organe d'éclairage OE, le capteur de mesure CM et son circuit de mesure CI, un module de communication radio MRC et une unité d'alimentation électrique autonome AL.

Le microcontrôleur CTRL comprend essentiellement un microprocesseur CPU, une mémoire vive RAM, une mémoire réinscriptible MEM et des ports d'entrées/sorties P0 à P4. La mémoire RAM est la mémoire de travail du microprocesseur CPU. La mémoire réinscriptible MEM héberge typiquement un système élémentaire dit « BIOS » gérant les entrées/sorties du microprocesseur, un microprogramme MP et une zone de stockage de données DATA.

Le microprogramme MP gère le fonctionnement général du dispositif de contrôle DCU. Le microprogramme MP intègre la logique de commande du dispositif de contrôle DCU, traite les données de mesure fournies par le circuit de mesure CI et gère différents échanges de données à travers le module de communication radio MRC dans un mode de fonctionnement connecté du dispositif de contrôle DCU, comme cela apparaîtra plus clairement par la suite.

La zone DATA stocke diverses données nécessaires au microprogramme MP et au fonctionnement du dispositif de contrôle DCU. Les ports d'entrées/sorties P0 à P4 sont reliés au microprocesseur CPU à travers un bus interne de communication de données (non représenté).

Les moyens d'interface homme-machine sont interfacés avec le microcontrôleur CTRL à travers le port d'entrée/sortie P0 et comprennent ici essentiellement les composants susmentionnés comme l'écran d'affichage EA, les touches TO et les voyants lumineux VO, ainsi qu'un haut-parleur miniature HP. L'écran d'affichage EA est typiquement un écran d'affichage de type « LCD ». Les touches TO sont typiquement des touches capacitives et les voyants lumineux VO comprennent typiquement une ou plusieurs diodes « LED ». Ces moyens d'interface homme-machine autorisent un dialogue interactif entre l'opérateur et le dispositif de contrôle DCU, notamment lors de la mise en service initiale du dispositif de contrôle DCU par l'opérateur et pendant les opérations de mesure.

L'organe d'éclairage OE est interfacé avec le microcontrôleur CTRL à travers le port d'entrée/sortie P1. L'organe d'éclairage OE est typiquement une diode de type « LED ».

Le circuit de mesure CI auquel est relié le capteur CM est un circuit de mesure d'inductance et est interfacé avec le microcontrôleur CTRL à travers le port d'entrée/sortie P2. Le module intégré LDC1614 commercialisé par la société Texas Instruments^{®} pourra par exemple être choisi pour le circuit de mesure d'inductance CI. Le circuit de mesure CI fournit sous au microcontrôleur CTRL, sous forme de donnée numérique, la valeur d'inductance du capteur CM qui est représentative de la distance d'écartement D des doigts d'étrier BH et BB. Le microcontrôleur CTRL commande l'affichage de la distance d'écartement D sur l'écran d'affichage EA.

Le module de communication radio MCR est ici un émetteur/récepteur de communication radio de type Wi-Fi/Bluetooth^{®} et est interfacé avec le microcontrôleur CTRL à travers le port d'entrée/sortie P3. Le module de communication radio MCR autorise des liaisons de communication de données sans fil, en mode Wi-Fi ou en mode Bluetooth^{®}, avec un dispositif externe tel qu'un dispositif informatique mobile de type dit « PDA » (pour « Personal Digital Asistant » en anglais), ou bien un smartphone ou tablette avec une application logicielle dédiée, ou un ordinateur.

L'unité d'alimentation électrique autonome AL est interfacée avec le microcontrôleur CTRL à travers le port d'entrée/sortie P4. L'unité d'alimentation électrique AL comprend une batterie rechargeable BR et des convertisseurs de tension (non représentés) qui fournissent des tensions d'alimentation Valim nécessaires au fonctionnement des différents composants de la carte électronique CT. La batterie rechargeable BR est typiquement une batterie de type lithium-ion. A travers le port d'entrée/sortie P4, le microcontrôleur CTRL commande une fonction de mise en veille/réveil du dispositif de contrôle DCU par une activation/désactivation de l'unité d'alimentation électrique autonome AL, de façon à maximiser la durée d'autonomie de l'alimentation électrique du dispositif de contrôle DCU. Typiquement, un accéléromètre (non représenté) est intégré dans le dispositif de contrôle DCU afin de détecter l'utilisation de celui-ci, par la détection de mouvement, et mettre en oeuvre la fonction de mise en veille/réveil.

La charge de la batterie BR est effectuée au moyen d'un chargeur électrique AC-DC standard, repéré CH, qui est enfichable sur une prise « USB » (de « Universal Serial Bus » en anglais), repérée USBa, de la carte électronique CT. La prise USBa est reliée à l'unité d'alimentation électrique AL et à un port de bus USB du microcontrôleur CTRL. Une liaison de communication de données filaire peut ainsi être établie entre le microcontrôleur CTRL et un dispositif informatique (ordinateur) par exemple pour des besoins de mise à jour, de configuration ou de dépannage du dispositif de contrôle DCU.

En référence maintenant plus particulièrement à la Fig.8, le dispositif de contrôle DCU comporte deux modes de fonctionnement, à savoir, un mode de fonctionnement autonome MFA et un mode de fonctionnement connecté MFC, qui sont gérés par le microprogramme MP embarqué dans la carte électronique CT.

A chaque mise sous tension du dispositif de contrôle DCU, représentée à la Fig.8 par le bloc START, le microprogramme MP exécute un processus d'initialisation et de calibrage INIT/CAL. Dans ce processus INIT/CAL, un calibrage de la mesure est réalisé en demandant à l'utilisateur de fermer les doigts d'étrier BH, BB, l'un contre. Dans cette position des doigts d'étrier BH, BB, validée par un appui de l'utilisateur sur une TO, le processus calibre à zéro la mesure de la distance d'écartement D. Ce processus d'initialisation et de calibrage INIT/CAL, automatique et périodique, permet d'améliorer la précision de la mesure, notamment en compensant des dérives éventuelles.

Différentes étapes fonctionnelles sont gérées par le microprogramme MP pour la commande des modes de fonctionnement MFA et MFC. Les étapes principales, repérées S0 à S10, sont décrites ci-dessus.

L'étape S0 concerne la sélection d'un des modes de fonctionnement, MFA ou MFC, du dispositif de contrôle DCU, qui est faite par l'opérateur via une action sur une touche TO.

Lorsque l'opérateur sélectionne le mode de fonctionnement autonome MFA, le processus de traitement suit ensuite les étapes S1 à S4. Dans le cas contraire, si le mode de fonctionnement connecté MFC est sélectionné, le processus de traitement suit les étapes S5 à S11.

Dans le mode de fonctionnement autonome MFA, l'étape S1 correspond à une information de l'opérateur par le processus qui lui indique que le dispositif de contrôle DCU est hors ligne, c'est-à-dire, non connecté en Wi-Fi ou Bluetooth^{®}, et est prêt pour une mesure.

L'étape S2 correspond à la mise en place de la tête de mesure TM du dispositif DCU sur le disque de frein. Lorsque le processus détecte une mise en place stable de la tête de mesure TM, le processus informe l'opérateur que la mesure peut être lancée, par un bip sonore émis par le haut-parleur miniature HP.

L'étape S3 correspond à la mesure de l'épaisseur du disque de frein qui est validée par l'opérateur en appuyant sur une touche TO. La mesure d'épaisseur est affichée sur l'écran EA. L'appui sur une autre touche TO relance une nouvelle mesure.

L'étape S4 correspond au stockage en mémoire de la mesure d'épaisseur dans le dispositif DCU.

Les étapes S2 à S4 sont répétées pour contrôler l'ensemble des disques de frein du véhicule.

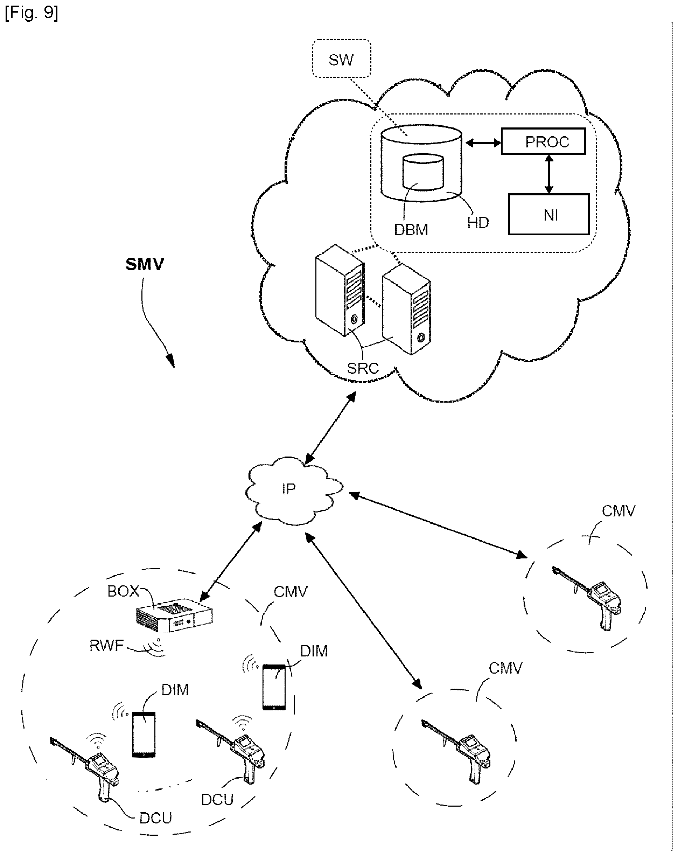

Les différentes mesures d'épaisseur effectuées pourront typiquement être enregistrées en association avec des données de référence correspondantes téléchargées des véhicules, telles que les numéros d'immatriculation des véhicules, et les dates/heures des mesures, mais non exclusivement. Les données enregistrées sont alors conservées dans le dispositif DCU jusqu'à une commutation de celui-ci dans le mode de fonctionnement connecté MFC où elles pourront être transmises à un dispositif externe. Ainsi, dans le mode de fonctionnement connecté MFC, les données enregistrées peuvent être transmises par le dispositif DCU vers un dispositif externe pour être stockées dans une base de données de maintenance de véhicules DBM (cf. Fig.9). Le dispositif externe est typiquement un dispositif informatique mobile d'utilisateur DIM (cf. Fig.9) de type « PDA », ou bien un smartphone ou tablette avec une application logicielle dédiée, ou un ordinateur ou serveur informatique local ou un serveur informatique distant SRC (cf. Fig.9).

Dans le mode de fonctionnement connecté MFC, l'étape S5 correspond à la sélection par l'opérateur du mode de connexion Wi-Fi ou Bluetooth^{®}. Une fois le dispositif de contrôle DCU connecté, le processus en informe l'opérateur par l'intermédiaire de l'écran d'affichage EA.

L'étape S6 correspond au téléchargement dans le dispositif de contrôle DCU d'un fichier de données de maintenance comprenant les données de référence, telles que les numéros d'immatriculation, des différents véhicules à contrôler dans le centre de maintenance automobile. Ce fichier de données de maintenance est téléchargé par le processus depuis la base de données de maintenance de véhicules DBM susmentionnée. Typiquement, cette base de données de maintenance de véhicules DBM est hébergée dans un serveur informatique local ou distant, comme le serveur informatique distant SRC montré à la Fig.9.

L'étape S7 correspond à la sélection par l'opérateur d'un véhicule dont les disques de frein doivent être contrôlés. Une fois le véhicule sélectionné, les étapes suivantes S8 à S10 sont exécutées. Ces étapes S8 à S10 sont similaires aux étapes S2 à S4 du mode de fonctionnement autonome MFA, respectivement.

Ainsi, l'étape S8 correspond à la mise en place de la tête de mesure TM du dispositif DCU sur le disque de frein. Lorsque le processus détecte une mise en place stable de la tête de mesure TM, le processus informe l'opérateur que la mesure peut être lancée, par un bip sonore émis par le haut-parleur miniature HP. L'étape S9 correspond à la mesure de l'épaisseur du disque de frein qui est validée par l'opérateur en appuyant sur une touche TO. La mesure d'épaisseur est affichée sur l'écran EA. L'appui sur une autre touche TO relance une nouvelle mesure. L'étape S10 correspond au stockage en mémoire de la mesure d'épaisseur dans le dispositif DCU. Les étapes S8 à S10 sont répétées pour contrôler l'ensemble des disques de frein du véhicule.

L'étape S11 correspond à la transmission par le dispositif DCU des données enregistrées à un dispositif externe, comme décrit plus haut, pour être stockées dans la base de données de maintenance de véhicules DBM susmentionnée.

Un exemple de configuration d'un système informatisé de gestion de maintenance de véhicules SMV selon l'invention incorporant une pluralité de dispositifs de contrôle DCU est montré à la Fig.9.

Dans cet exemple, le système SMV assure une fonction de gestion de maintenance de véhicules pour une pluralité de centres de maintenance automobile CMV, exploités par exemple par une même entité commerciale. Les centres de maintenance automobile CMV sont équipés de dispositifs de contrôle DCU selon l'invention.

Comme montré à la Fig.9, les centres de maintenance automobile CMV sont reliés au serveur informatique distant SRC susmentionné, à travers un réseau étendu de communication de données IP, tel qu'Internet. Le serveur informatique SRC comprend notamment un processeur PROC qui communique avec un dispositif de stockage de données HD, et des dispositifs matériels conventionnels tels que des interfaces réseau NI et autres dispositifs (non représentés). Le processeur PROC comprend une ou plusieurs unités centrales de traitement de données (non représentées) et des mémoires volatiles et non-volatiles (non représentées) pour l'exécution de programmes informatiques. Le serveur informatique SRC comprend un système logiciel SW qui est hébergé dans le dispositif de stockage de données HD, conjointement avec la base de données de maintenance de véhicules DBM. La base de données de maintenance de véhicules DBM contient des informations sur les véhicules et leurs équipements, notamment leurs numéros d'immatriculation et des données de maintenance, et un historique des différentes interventions de maintenance réalisées sur les véhicules. Le système informatisé de gestion de maintenance de véhicules SMV selon l'invention est mis en oeuvre notamment par l'exécution par le processeur PROC d'instructions de code du système logiciel SW.

Dans un centre de maintenance automobile CMV, un réseau local de communication de données RWF est établi ici au moyen d'un modem routeur Wi-Fi, repéré BOX. Le modem routeur BOX est en communication de données avec le serveur informatique SRC à travers le réseau IP. Les dispositifs de contrôle DCU du centre CMV sont ici connectés en Wi-Fi, via le réseau local RWF, à des dispositifs informatiques mobiles d'utilisateur DIM de type « PDA ». Chaque dispositif d'utilisateur DIM héberge une application logicielle dédiée qui est en communication de données avec le dispositif de contrôle DCU correspondant et le serveur informatique SRC. L'application logicielle d'un dispositif d'utilisateur DIM gère le dispositif de contrôle DCU et contrôle notamment les échanges de données avec le serveur informatique SRC. Les dispositifs DIM sont utilisés par les opérateurs du centre CMV notamment pour communiquer avec le système SMV.

Des informations sur des véhicules présents dans le centre CMV pour des opérations de maintenance et sur leurs équipements, ainsi que les travaux à effectuer sur les véhicules, sont téléchargés dans les dispositifs DIM, à partir de la base de données de maintenance de véhicules DBM, et sont disponibles pour les applications logicielles dédiées de ces dispositifs DIM. Ces informations téléchargées comprennent typiquement les numéros d'immatriculation des véhicules et des données de maintenance comme les cotes d'usure des disques de frein et autres.

Dans le dispositif d'utilisateur DIM, l'application logicielle dédiée traite les données de mesure d'épaisseur fournies par le dispositif de contrôle DCU en les comparant aux cotes d'usure des disques de frein et produit un diagnostic de remplacement des disques de frein à l'intention de l'opérateur. L'application logicielle dédiée du dispositif d'utilisateur DIM transmet au serveur informatique SRC les données de mesure d'épaisseur et les données des interventions effectuées, et alimente ainsi un historique de maintenance des véhicules qui est conservé dans la base de données de maintenance de véhicules DBM.

Bien entendu, le système informatisé de gestion de maintenance de véhicules SMV décrit ci-dessus en référence à la Fig.9 n'est qu'un exemple parmi plusieurs configurations possibles. Ainsi, dans certaines formes de réalisation, le serveur informatique sera un serveur local du centre de maintenance automobile. La liaison de communication de données entre le dispositif de contrôle selon l'invention et le dispositif informatique mobile d'utilisateur pourra être établie en Bluetooth^{®} et non en Wi-Fi comme dans l'exemple de la Fig.9. Par ailleurs, le dispositif de contrôle selon l'invention pourra être conçu avec des capacités matérielle et logicielle accrues le rendant apte à héberger davantage d'intelligence embarquée, sous la forme par exemple d'une application informatique dédiée remplissant les fonctions de celle comprise dans le dispositif informatique mobile d'utilisateur et décrite plus haut en relation à la Fig.9. Dans ce dernier cas, l'application informatique dédiée du dispositif de contrôle selon l'invention sera en communication de données directement avec le serveur informatique, typiquement via le réseau local Wi-Fi, supprimant ainsi le recours au dispositif informatique mobile d'utilisateur pour la réalisation des fonctions.

Bien entendu, l'invention ne se limite pas aux exemples de réalisation qui ont été décrits ici à titre illustratif. L'homme du métier, selon les applications de l'invention, pourra apporter différentes modifications et variantes entrant dans le champ de protection de l'invention défini par les présentes revendications.

## Revendications

1. Dispositif de contrôle d'usure de disque de frein de véhicule (DCU) comprenant un corps longitudinal (CL) formé d'une première tige (TH) et d'une deuxième tige (TB) assemblées en coulissement, et une tête de mesure (TM) formée à une première extrémité dudit corps longitudinal (CL) et ayant des premier et deuxième doigts d'étrier (BH, BB) destinés à enserrer ledit disque de frein (DK) sur son épaisseur, lesdits premier et deuxième doigts d'étrier (BH, BB) étant solidaires respectivement desdites première et deuxième tiges (TH, TB) et ayant une distance d'écartement (D) ajustable par un coulissement de ladite deuxième tige (TB) par rapport à ladite première tige (TH), et un boîtier électronique (BE) comprenant un capteur de mesure de déplacement (CM) pour la mesure de la distance d'écartement des doigts d'étrier, des moyens électronique de mesure et de commande (CT) et des moyens d'interface homme-machine (CE) muni d'un écran d'affichage (EA) pour l'affichage de la mesure d'épaisseur du disque de frein par le capteur de déplacement, **caractérisé en ce que** ledit boîtier électronique (BE) comprend une poignée de préhension (PG) et supporte ledit corps longitudinal (CL) par un assemblage avec une deuxième extrémité de celui-ci, **en ce que** ledit corps longitudinal (CL) a une longueur hors boîtier électronique (LB) et ladite tête de mesure (TM) a un encombrement facial (HT, LT) et une distance d'écartement maximum (Dmax) desdits premier et deuxième doigts d'étrier (BH, BB) qui sont optimisés pour une adaptation du dispositif de contrôle (DCU) à différents types de disque de frein et configurations de montage dans ledit véhicule, et **en ce que** ladite longueur hors boîtier électronique dudit corps longitudinal (CL) est au moins égale à 200 millimètres, ledit encombrement facial est déterminé par une longueur faciale (HT) comprise entre 23 et 27 millimètres et une largeur faciale (LT) comprise entre 4 et 8 millimètres, et ladite distance d'écartement maximum (Dmax) est comprise entre 40 et 60 millimètres.

2. Dispositif selon la revendication 1, **caractérisé en ce qu'**il comprend également un organe de tirage (AT) fixé sur ladite deuxième tige (TB) et agencé de façon à procurer une prise à un opérateur pour un actionnement de celle-ci.

3. Dispositif selon la revendication 2, **caractérisé en ce que** ledit organe de tirage (AT) est fixé sur ladite deuxième tige (TB) à une distance (LA) comprise entre 90 et 140 millimètres par rapport à une extrémité frontale de ladite tête de mesure (TM) lorsque celle-ci est totalement fermée avec lesdits premier et deuxième doigts d'étrier (BH, BB) en appui l'un contre l'autre.

4. Dispositif selon l'une quelconque des revendications 1 à 3, **caractérisé en ce qu'**il comprend également un ressort (RC) couplé mécaniquement avec ladite deuxième tige (TB) et exerçant une action de fermeture dudit deuxième doigt d'étrier (BB) contre ledit premier doigt d'étrier (BH).

5. Dispositif selon l'une quelconque des revendications 1 à 4, **caractérisé en ce que** ledit capteur de mesure de déplacement (CM) comprend une bobine électrique (BE) ayant un noyau mobile (NF) qui est couplé mécaniquement à ladite deuxième tige (TB), ladite bobine électrique (BE) étant connectée à un circuit de mesure d'inductance (CI).

6. Dispositif selon l'une quelconque des revendications 1 à 5, **caractérisé en ce que** ladite tête de mesure (TM) comprend un organe d'éclairage (OE).

7. Dispositif selon l'une quelconque des revendications 1 à 6, **caractérisé en ce que** ledit boîtier électronique (BE) comprend également un module de communication radio (MCR).

8. Dispositif selon la revendication 7, **caractérisé en ce qu'**il comprend un mode de fonctionnement connecté (MFC) dans lequel une communication de données est établie avec un dispositif externe (DIM, SRC).

9. Système informatisé de gestion de maintenance de véhicules (SMV) comprenant un serveur informatique (SRC) relié à un réseau de communication de données (RWF, IP), **caractérisé en ce qu'**il comprend au moins un dispositif de contrôle d'usure de disque de frein de véhicule (DCU) selon la revendication 8 relié audit réseau de communication de données (RWF, IP) et échangeant des données avec ledit serveur informatique (SRC). 1

## Patentansprüche

1. Vorrichtung (DCU) für eine Überwachung des Bremsscheibenverschleißes eines Fahrzeugs, umfassend einen Längskörper (CL), der aus einer ersten Stange (TH) und einer zweiten Stange (TB) ausgebildet ist, die gleitend montiert sind, und einen Messkopf (TM), der an einem ersten Ende des Längskörpers (CL) ausgebildet ist und einen ersten und einen zweiten Bremssattelfinger (BH, BB) besitzt, die dafür bestimmt sind, die Bremsscheibe (DK) über ihre Dicke zu umschließen, wobei der erste und der zweite Bremssattelfinger (BH, BB) jeweils an der ersten und der zweiten Stange (TH, TB) fest verbunden sind und einen Lückenabstand (D) besitzen, der durch Gleitenlassen der zweiten Stange (TB) relativ zu der ersten Stange (TH) einstellbar ist, und ein elektronisches Gehäuse (BE), umfassend einen Wegmesssensor (CM) für die Messung des Lückenabstands der Bremssattelfinger, elektronische Mess- und Steuermittel (CT) und Mensch-Maschine-Schnittstellen-Mittel (CE), die mit einem Anzeigebildschirm (EA) für die Anzeige der Dickenmessung der Bremsscheibe durch den Verschiebungssensor ausgestattet sind, **dadurch gekennzeichnet, dass** das elektronische Gehäuse (BE) einen Handgriff (PG) umfasst und den Längskörper (CL) durch eine Anordnung mit einem zweiten Ende dessen umfasst, **dass** der Längskörper (CL) eine Länge ohne das elektronische Gehäuse (LB) besitzt und der Messkopf (TM) eine Flächengröße (HT, LT) und einen maximalen Lückenabstand (Dmax) des ersten und des zweiten Bremssattelfingers (BH, BB) besitzt, die für eine Anpassung der Steuervorrichtung (DCU) für verschiedene Arten von Bremsscheiben und Montagekonfigurationen in dem Fahrzeug optimiert sind, und **dadurch, dass** die Länge des Längskörpers (CL) ohne das elektronische Gehäuse mindestens gleich 200 Millimeter beträgt, die Flächengröße durch eine Flächenlänge (HT) zwischen 23 und 27 Millimeter umfasst und eine Flächenbreite (LT) zwischen 4 und 8 Millimeter umfasst und der maximale Lückenabstand (Dmax) zwischen 40 und 60 Millimeter umfasst.

2. Vorrichtung nach Anspruch 1, **dadurch gekennzeichnet, dass** sie ferner ein Zugelement (AT) umfasst, das an der zweiten Stange (TB) befestigt und angeordnet ist, um einem Bediener Halt für eine Betätigung dessen zu verschaffen.

3. Vorrichtung nach Anspruch 2, **dadurch gekennzeichnet, dass** das Zugelement (AT) an der zweiten Stange (TB) in einem Abstand (LA), der zwischen 90 und 140 Millimeter relativ zu einem vorderen Ende des Messkopfs (TM) umfasst, befestigt ist, wenn dieser vollständig geschlossen ist, wobei der erste und der zweite Bremssattelfinger (BH, BB) aneinander anliegen.

4. Vorrichtung nach einem der Ansprüche 1 bis 3,
**dadurch gekennzeichnet, dass** sie ferner eine Feder (RC) umfasst, die mit der zweiten Stange (TB) mechanisch gekoppelt ist und eine Schließwirkung des zweiten Bremssattelfingers (BB) gegen den ersten Bremssattelfinger (BH) ausübt.

5. Vorrichtung nach einem der Ansprüche 1 bis 4,
**dadurch gekennzeichnet, dass** der Wegmesssensor (CM) eine elektrische Spule (BE) umfasst, die einen bewegbaren Kern (NF) besitzt, der mit der zweiten Stange (TB) mechanisch gekoppelt ist, wobei die elektrische Spule (BE) mit einem Induktivitätsmesskreis (CI) verbunden ist.

6. Vorrichtung nach einem der Ansprüche 1 bis 5,
**dadurch gekennzeichnet, dass** der Messkopf (TM) ein Beleuchtungselement (OE) umfasst.

7. Vorrichtung nach einem der Ansprüche 1 bis 6,
**dadurch gekennzeichnet, dass** das elektronische Gehäuse (BE) auch ein Funkkommunikationsmodul (MCR) umfasst.

8. Vorrichtung nach Anspruch 7, **dadurch gekennzeichnet, dass** sie einen verbundenen Betriebsmodus (MFC) umfasst, wobei eine Datenkommunikation mit einer externen Vorrichtung (DIM, SRC) hergestellt wird.

9. Computerisiertes Verwaltungssystem (SMV) zum Warten von Fahrzeugen, umfassend einen Computerserver (SRC), der mit einem Datenkommunikationsnetzwerk (RWF, IP) verbunden ist,
**dadurch gekennzeichnet, dass** es mindestens eine Vorrichtung (DCU) für die Überwachung des Bremsscheibenverschleißes eines Fahrzeugs nach Anspruch 8 umfasst, die mit dem Datenkommunikationsnetzwerk (RWF, IP) verbunden ist und Daten mit dem Computerserver (SRC) austauscht.

## Claims

1. Device (DCU) for monitoring the wear on a vehicle brake disk, comprising a longitudinal body (CL) formed by a first rod (TH) and a second rod (TB) which are slidably assembled, and a measurement head (TM) which is formed at a first end of said longitudinal body (CL) and has a first caliper finger and a second caliper finger (BH, BB) for clamping said brake disk (DK) over the thickness thereof, said first caliper finger and second caliper finger (BH, BB) being rigidly connected to said first rod and second rod (TH, TB), respectively, and having a spacing distance (D) which can be adjusted by sliding said second rod (TB) relative to said first rod (TH), and an electronic box (BE) comprising a movement measurement sensor (CM) for measuring the spacing distance between the caliper fingers, electronic measurement and control means (CT) and human-machine interface means (CE) which have a display screen (EA) for displaying the brake disk thickness measurement measured by the movement sensor, **characterized in that** said electronic box (BE) comprises a gripping handle (PG) and supports said longitudinal body (CL) by means of assembly with a second end thereof, **in that** said longitudinal body (CL) has a length (LB) outside the electronic box and said measurement head (TM) has a facial dimension (HT, LT) and a maximum spacing distance (Dmax) between said first caliper finger and second caliper finger (BH, BB) which are optimized for adapting the monitoring device (DCU) to different brake disk types and mounting configurations in said vehicle, and **in that** said length outside the electronic box of said longitudinal body (CL) is at least equal to 200 millimeters, said facial dimension is determined by a facial length (HT) of between 23 and 27 millimeters and a facial width (LT) of between 4 and 8 millimeters, and said maximum distance (Dmax) is between 40 and 60 millimeters.

2. Device according to claim 1, **characterized in that** it also comprises a pull member (AT) which is secured to said second rod (TB) and is arranged to provide a grip for an operator for actuation thereof.

3. Device according to claim 2, **characterized in that** said pull member (AT) is secured to said second rod (TB) at a distance (LA) of between 90 and 140 millimeters from a front end of said measurement head (TM) when the head is fully closed with said first caliper finger and second caliper finger (BH, BB) bearing against each other.

4. Device according to any one of claims 1 to 3, **characterized in that** it also comprises a spring (RC) which is mechanically coupled to said second rod (TB) and which exerts an action for closing said second caliper finger (BB) against said first caliper finger (BH).

5. Device according to any one of claims 1 to 4, **characterized in that** said movement measurement sensor (CM) comprises an electrical coil (BE) having a movable core (NF) which is mechanically coupled to said second rod (TB), said electrical coil (BE) being connected to an inductance measurement circuit (CI).

6. Device according to any one of claims 1 to 5, **characterized in that** said measurement head (TM) comprises a lighting member (OE).

7. Device according to any one of claims 1 to 6, **characterized in that** said electronic box (BE) also comprises a radio communication module (MCR).

8. Device according to claim 7, **characterized in that** it comprises a connected operating mode (MFC) in which data communication is established with an external device (DIM, SRC).

9. Computerized vehicle maintenance management system (SMV) comprising a computer server (SRC) connected to a data communication network (RWF, IP), **characterized in that** it comprises at least one device (DCU) for monitoring the wear on a vehicle brake disk according to claim 8, which is connected to said data communication network (RWF, IP) and exchanges data with said computer server (SRC).
